# EUROPÄISCHE PATENTSCHRIFT

(11) **EP 2 543 696 B1**
(45) Veröffentlichungstag und Bekanntmachung des Hinweises auf die Patenterteilung: **12.09.2018**
(21) Anmeldenummer: 12172779.6
(22) Anmeldetag: 20.06.2012
(51) Int. Cl.: C09D 177/00, C08L 77/10, C09D 177/10, B33Y 70/00, C08J 7/04, C08L 71/08

(54) **Pulver enthaltend mit Polymer beschichtete polymere Kernpartikel**
Powder containing core particles coated with polymer
Poudre contenant des noyaux de particules revêtus de polymère

(30) Priorität: 06.07.2011 DE 102011078721
(43) Veröffentlichungstag der Anmeldung: 09.01.2013
(73) Patentinhaber: Evonik Degussa GmbH, 45128 Essen (DE)
(72) Erfinder: Diekmann, Wolfgang, 45731 Waltrop (DE); Baumann, Franz-Erich, 48249 Dülmen (DE); Grebe, Maik, 44805 Bochum (DE); Warnke, Kristiane, 45665 Recklinghausen (DE); Monsheimer, Sylvia, 45721 Haltern am See (DE)

(56) Entgegenhaltungen:
- WO-A1-03/106146
- DE-A1- 19 747 309
- DE-A1- 19 826 135
- US-A1- 2006 202 395

## Beschreibung

Die Erfindung betrifft ein Pulver auf Basis von mit Polymeren beschichteten Füllstoffen, die Vorteile hinsichtlich der Stabilität des Herstellprozesses und der Dichte aufweist, die Verwendung dieses Pulvers in formgebenden Verfahren. Weiterhin werden Formkörper beschrieben, hergestellt durch ein schichtweise arbeitendes Verfahren, mit welchem selektiv Bereiche einer Pulverschicht aufgeschmolzen werden, unter Verwendung dieses Pulvers. Nach Abkühlen und Verfestigen der zuvor Schicht für Schicht aufgeschmolzenen Bereiche kann der Formkörper dem Pulverbett entnommen werden. Die Formteile zeigen außerdem weniger Neigung zum Verzug als herkömmliche Formteile.

Die zügige Bereitstellung von Prototypen ist eine in der jüngsten Zeit häufig gestellte Aufgabe. Besonders geeignet sind Verfahren, die auf der Basis von pulverförmigen Werkstoffen arbeiten, und bei denen schichtweise durch selektives Aufschmelzen und Verfestigen die gewünschten Strukturen hergestellt werden. Auf Stützkonstruktionen bei Überhängen und Hinterschnitten kann dabei verzichtet werden, da das die aufgeschmolzenen Bereiche umgebende Pulverbett ausreichende Stützwirkung bietet. Ebenso entfällt die Nacharbeit, Stützen zu entfernen. Die Verfahren sind auch für die Herstellung von Kleinserien geeignet.

Die Selektivität der schichtweise arbeitenden Verfahren kann dabei beispielsweise über den Auftrag von Suszeptoren, Absorbern, Inhibitoren oder durch Masken oder über fokussierte Energieeinbringung, wie beispielsweise durch einen Laserstrahl, oder über Glasfasern erfolgen. Der Energieeintrag wird über elektromagnetische Strahlung erreicht.

Ein Verfahren, welches besonders gut für den Zweck des Rapid Prototypings geeignet ist, ist das selektive Laser-Sintern. Bei diesem Verfahren werden Kunststoffpulver in einer Kammer selektiv kurz mit einem Laserstrahl belichtet, wodurch die Pulver-Partikel, die von dem Laserstrahl getroffen werden, schmelzen. Die geschmolzenen Partikel laufen ineinander und erstarren schnell wieder zu einer festen Masse. Durch wiederholtes Belichten von immer neu aufgebrachten Schichten können mit diesem Verfahren dreidimensionale Körper einfach und schnell hergestellt werden.

Das Verfahren des Laser-Sinterns (Rapid Prototyping) zur Darstellung von Formkörpern aus pulverförmigen Polymeren wird eingehend in den Patentschriften US 6 136 948 und WO 96/06881 beschrieben. Eine Vielzahl von Polymeren und Copolymeren wird für diese Anwendung beansprucht, wie z. B. Polyacetat, Polypropylen, Polyethylen, lonomere und Polyamid.

Andere gut geeignete Verfahren sind das SIV-Verfahren, wie in WO 01/38061 beschrieben, oder ein Verfahren wie in EP 1 015 214 beschrieben. Beide Verfahren arbeiten mit einer flächigen Infrarotheizung zum Aufschmelzen des Pulvers. Die Selektivität des Aufschmelzens wird bei ersterem durch die Auftragung eines Inhibitors, beim zweiten Verfahren durch eine Maske erreicht. Ein weiteres Verfahren ist in DE 103 11 438 beschrieben. Bei diesem wird die zum Verschmelzen benötigte Energie durch einen Mikrowellengenerator eingebracht, und die Selektivität wird durch Auftragen eines Suszeptors erreicht.

Weitere geeignete Verfahren sind solche, die mit einem Absorber arbeiten, der entweder im Pulver enthalten ist, oder der per Inkjet-Verfahren aufgetragen wird wie in DE 10 2004 012 682.8, DE 10 2004 012 683.6 und DE 10 2004 020 452.7 beschrieben.

Für die genannten Rapid-Prototyping- bzw. Rapid-Manufacturing-Verfahren (RP- oder RM-Verfahren) können pulverförmige Substrate, insbesondere Polymere, vorzugsweise ausgewählt aus Polyestern, Polyvinylchlorid, Polyacetal, Polypropylen, Polyethylen, Polystyrol, Polycarbonat, Poly-(N-methylmethacrylimide) (PMMI), Polymethylmethacrylat (PMMA), lonomer, Polyamid, oder Gemische davon eingesetzt werden.

In WO 95/11006 wird ein für das Lasersintern geeignetes Polymerpulver beschrieben, das bei der Bestimmung des Schmelzverhaltens durch Differential Scanning Calorimetry bei einer Scanning rate von 10 bis 20 °C/min keine Überlappung des Schmelze- und Rekristallisationspeaks zeigt, einen ebenfalls durch DSC bestimmten Kristallinitätsgrad von 10 bis 90% aufweist, ein zahlenmäßiges Mittel des Molekulargewichts Mn von 30 000 bis 500 000 hat und dessen Quotient Mw/Mn im Bereich von 1 bis 5 liegt.

Die DE 197 47 309 beschreibt die Verwendung eines Polyamid-12-Pulvers mit erhöhter Schmelztemperatur und erhöhter Schmelzenthalpie, welches durch Umfällung eines zuvor durch Ringöffnung und anschließende Polykondensation von Laurinlactam hergestellten Polyamids erhalten wird. Es handelt sich dabei um ein Polyamid 12.

Die WO 2007/051691 beschreibt Verfahren zur Herstellung von ultrafeinen Pulvern auf Basis von Polyamiden, bei welchem man Polyamide in Gegenwart von anorganischen Partikeln ausfällt, wobei man eine Suspension einsetzt mit im alkoholischen Medium suspendierten anorganischen Partikeln mit einer mittleren Größe der anorganischen Partikel d₅₀ im Bereich von 0,001 bis 0,8 µm. Ziel dieses Verfahrens war es eine Färbung des Pulvers zu erreichen. Dabei wurden Polyamidfeinpulver erhalten, wobei die anorganischen Partikel aufgrund ihrer geringen Größe gleichmäßig im Verbundteilchen verteilt sind.

Die DE 10 2004 003 485 beschreibt die Verwendung von Partikeln mit zumindest einer Kavität zur Verwendung in schichtaufbauenden Verfahren. Dabei enthalten alle Partikel zumindest eine Kavität, und die die Kavität enthaltenden Partikel werden durch den Eintrag elektromagnetischer Energie aufgeschmolzen. Die beschriebenen Pulverteilchen weisen eine Oberflächenschicht mit geringer Stärke auf.

Die DE 102 27 224 beschreibt ein Granulat für 3D-Binderdruck, das aus mit einer eine unpolare Außenfläche aufweisenden Oberflächenschicht versehenen Partikeln besteht. Die Oberflächenschicht der beschriebenen Pulverteilchen weist jedoch eine geringe Stärke auf.

Die oben beschriebenen Pulver werden im Stand der Technik gelegentlich zur Verstärkung mit anderen Partikeln wie z.B. Metallpartikel, Glaspartikel oder TiO₂-Partikel vermischt. Nachteilig ist hierbei jedoch, dass es bei der Handhabung solcher Pulvermischungen oft zu Entmischungsphänomenen kommt, so dass eine Konstanz der mechanischen Eigenschaften, die mit dem Verstärkungsstoff erreicht werden soll, nicht immer gegeben ist. Die Bereiche, in denen der Anteil an Füllstoff zu hoch ist, werden sehr spröde und damit unbrauchbar, die Bereiche, in denen zuwenig Füllstoff enthalten sind, sind weicher als geplant. Die Entmischung beruht auf der unterschiedlichen Dichte der Polymerpartikel und des Füllstoffes und ist tendenziell bei jedem Transport und der Handhabung der Pulvermischung mehr oder weniger evident. Insbesondere wenn im Rapid Manufacturing die Handhabung des Pulvers automatisiert wird, entstehen schwer kontrollierbar abweichende Eigenschaften an den produzierten Bauteilen.

Aufgabe der vorliegenden Erfindung war es das Problem des Entmischungsphänomens auszuräumen und eine Verbesserung bei der Konstanz der mechanischen Eigenschaften im Formkörper zu erzielen, die mit dem Verstärkungsstoff erreicht werden sollen.

Die technische Aufgabe wurde gelöst durch ein Pulver zur Verwendung in einem schichtweise arbeitenden Verfahren zur Herstellung von Formkörpern, bei dem selektiv Bereiche der jeweiligen Pulverschicht durch den Eintrag elektromagnetischer Energie aufgeschmolzen werden, enthaltend Verbundpartikel, die von ganz oder teilweise mit einem gefällten ersten Polymer beschichten Kernpartikeln dargestellt werden, wobei die Kernpartikel ein zweites Polymer enthalten oder aus einem zweiten Polymer gefertigt sind, das verschieden ist vom gefällten ersten Polymer, und wobei das Verhältnis des mittleren Korndurchmessers d₅₀ der Verbundpartikel zum mittleren Korndurchmesser d₅₀ der Kernpartikel 1,5 oder größer beträgt.

Dabei weisen die Kernpartikel in allen drei Raumrichtungen einen mittleren Korndurchmesser d₅₀ von 1 µm oder größer, vorzugsweise 1 bis 100 µm auf. Die Angabe der Korndurchmesser der Kernpartikel bezieht sich hierbei auf die noch vom gefällten Polymer unbeschichteten Partikel (Kern).

Wie bereits erwähnt, enthalten die Kernpartikel, die im zu bildenden Verbundpartikel den Kern darstellen, ein zweites Polymer. Besonders bevorzugt ist, dass die Kernpartikel aus einem zweiten Polymer gefertigt sind.

Das zweite Polymer ist ausgewählt aus Polycarbonat, Polymethylmethacrylat, Polypropylen, Polybutylenterephthalat, Polyetylenterephthalat, Polyetheretherketon, Polyphthalamid. Die Kernpartikel, die ein zweites Polymer enthalten oder aus einem zweiten Polymer bestehen, werden beispielsweise durch Vermahlung hergestellt.

Bei dem schichtweise arbeitenden Verfahren zur Herstellung von Formkörpern handelt es sich vorzugsweise um selektives Laser-Sintern.

Überraschenderweise wurde nun gefunden, dass sich durch die Verwendung von Kernpartikeln, die ein Polymer enthalten oder daraus gefertigt sind, als Verstärkungsstoff, die fest mit dem gefällten ersten Polymer verbunden sind (Verbundpartikel), Formkörper durch ein schichtweise arbeitendes Verfahren bei welchem selektiv Bereiche der jeweiligen Pulverschicht aufgeschmolzen werden, produzieren lassen, die Vorteile bezüglich der Dichte und Verzugsneigung aufweisen und dabei bessere Eigenschaften bezüglich der Konstanz der Verarbeitung aufweisen als solche aus einem verstärkten Polymerpulver des Standes der Technik.

Das Pulver gemäß der vorliegenden Erfindung unterliegt aufgrund der festen Verbindung zwischen Polymer und Füllstoff nicht mehr der Problematik der Entmischung, was zu einer Verbesserung bei der Konstanz der mechanischen Eigenschaften im aus dem Pulver erzeugten Formkörper führt. Da bei dem erfindungsgemäßen Pulver keine Entmischung mehr auftritt, können aus diesem Pulver im Aufbau gleichmäßige Bauteile und Bauteile mit gleichmäßiger Qualität hergestellt werden. Aufgrund der dauerhaft gleichmäßige Zusammensetzung durch den festen Verbund von Polymer und Kernpartikel ist die Recyclebarkeit des Pulvers auch über mehrere Stufen wesentlich verbessert. Ein weiterer Vorteil ergibt sich aus der Verwendung von kostengünstigen polymeren Füllstoffen (zweites Polymer) als Kern der Verbundpartikel. Ein zusätzlicher Vorteil ergibt sich, wenn Pulver mit geringerem Gewicht und daraus hergestellte Formkörper mit geringerem Gewicht erwünscht sind, im Vergleich zu anderen Füllstoffen mit höheren spezifischen Gewichten. Auch bei dem Einsatz der erfindungsgemäßen Pulver gibt es Vorteile. So lassen sich die erfindungsgemäßen Pulver in größeren Verpackungseinheiten lagern, transportieren und einsetzen, ohne dass eine Entmischung auftreten kann. Bei der Durchführung des Laser-Sinter-Verfahrens lassen sich somit auch größere Produktvorlagen realisieren, das heißt, in den Probenvorratsbehälter kann mehr Pulver eingefüllt werden, bzw. der Probenvorratsbehälter kann größer dimensioniert sein, ohne dass die Qualität der erhaltenen Bauteile dadurch negativ beeinflusst wird. Weiterhin führt auch eine Fluidisierung in der Vorlage nicht zu einer Entmischung wie sie häufiger bei Systemen aus dem Stand der Technik beobachtet wird. Da die Pulver der vorliegenden Erfindung eine äußere Hülle aus Polymer aufweisen, ist auch der Energieeintrag durch den Laser gleichmäßiger. Bei Pulvern aus dem Stand der Technik trifft der Laser mal auf ein Polymerpartikel und mal auf einen Füllstoffpartikel. Je nach Füllstofftyp kann im Extremfall eine fast vollständige Absorption bis hin zu einer fast vollständigen Reflektion der Energie erfolgen. Diese Problematik wird bei Pulvern gemäß der vorliegenden Erfindung in vorteilhafter Weise umgangen.

Die zur Beschichtung mit dem gefällten ersten Polymer verwendeten Kernpartikel sind vorzugsweise aus einem zweiten Polymer gefertigt. Die Verwendung eines Pulvers mit einem Kern aus Polymer in einem schichtweise arbeitenden Verfahren zur Herstellung von Formkörpern ergibt einen verstärkenden Effekt. Im Gegensatz zu Polymerpulvern, die mit anderen Partikeln lediglich gemischt sind (Dry-Blend) weisen die Pulver gemäß der vorliegenden Erfindung keine Entmischung mehr auf.

Im Verbundpartikel stellen die Kernpartikel, die das zweite Polymer enthalten bzw., die aus dem zweiten Polymer bestehen, den Kern dar. Das Pulver gemäß der vorliegenden Erfindung hat vorzugsweise einen Kern-Hülle-Aufbau. Das zweite Polymer des Kernpartikels kann jegliches bekannte Polymer sein, solange das zweite Polymer in dem Lösungsmittel nicht oder im wesentlichen nicht löslich ist, in dem das fällbare erste Polymer gelöst wird. Damit ist das zweite Polymer verschieden von dem (gefällten bzw. fällbaren) ersten Polymer. Das zweite Polymer unterscheidet sich vom (gefällten bzw. fällbaren) ersten Polymer zumindest durch seine Lösungseigenschaften in einem gegebenen Lösungsmittel, welches das erste Polymer löst.

Die zu beschichtenden Kernpartikel können bereits im Verbund mit anorganischem Material vorliegen, beispielsweise mit Metalloxiden (wie Al₂O₃, TiO₂, ZrO₂, ZnO, Bi₂O₃) oder mit SiO₂, Polyphosphaten, Phosphinaten, Bornitrid, Borcarbid, Mischoxiden und Spinellen.

Die jeweiligen Kernpartikel können in folgenden Formen ausgebildet sein: kugelförmig, plättchenförmig oder länglich. Darüber hinaus können die jeweiligen Kernpartikel scharfkantig, abgerundet oder glatt sein. Die genannten Kernpartikel können vor Auftrag des zu fällenden ersten Polymers gegebenenfalls zusätzlich mit Schlichtemitteln beschichtet sein.

Bei dem gefällten bzw. fällbaren ersten Polymer handelt es sich um ein Polymer, das sich in einem flüssigen Medium enthaltend ein Lösungsmittel lösen lässt, und durch Änderungen von bestimmten Parametern, wie z.B. Temperatur, Druck, Gehalt an Lösungsmittel, Nichtlöser, anti-Lösungsmittel, Fällungsmittel, als vollständig oder teilweise unlöslicher Niederschlag in Form von Flocken, Tröpfchen oder in kristalliner Form ausfällt. Die Art des Lösungsmittels und der Gehalt an Lösungsmittel, sowie die weiteren Parameter, um das entsprechende Polymer zu lösen oder zu fällen, hängen dabei vom Polymer ab.

Das fällbare bzw. gefällte erste Polymer ist ausgewählt aus Polyolefinen, Polyethylen, Polypropylen, Polyvinylchlorid, Polyacetal, Polystyrol, Polyimiden, Polysulfonen, Poly-(N-methylmethacrylimide) (PMMI), Polymethylmethacrylat (PMMA), Polyvinylidenflouriden (PVDF), lonomer, Polyetherketonen, Polyaryletherketonen, Polyamid, Copolyamid oder Mischungen daraus, insbesondere Mischungen aus Homo- und Copolyamid.

In einer weiteren Ausführungsform wird das gefällte erste Polymer zur Beschichtung der Kernpartikel durch Fällung zumindest eines Polyamids des AABB-Types oder durch gemeinsame Fällung zumindest eines Polyamids des AB-Types und zumindest eines Polyamid des AABB-Types erhalten. Dabei sind cogefällte Polyamide bevorzugt, wobei zumindest Polyamid 11 oder Polyamid 12 und zumindest ein Polyamid auf der Basis von PA1010, PA1012, PA1212 oder PA1013 enthalten ist.

Folgende fällbare Polymere lassen sich beispielsweise nennen: es lassen sich Polyolefine und Polyethylen beispielsweise in Toluol, Xylol bzw. 1,2,4-Trichlorbenzol lösen. Polypropylen lässt sich beispielsweise in Toluol bzw. Xylol lösen. Polyvinylchlorid lässt sich beispielsweise in Aceton lösen. Polyacetal lässt sich beispielsweise in DMF, DMAc bzw. NMP lösen. Polystyrol lässt sich beispielsweise in Toluol lösen. Polyimide lassen sich beispielsweise in NMP lösen. Polysulfone lassen sich beispielsweise in Sulfolan lösen. Poly-(N-methylmethacrylimide) (PMMI) lassen sich beispielsweise in DMAc bzw. NMP lösen. Polymethylmethacrylat (PMMA) lässt sich beispielsweise in Aceton lösen. Polyvinylidenfluoride lassen sich in N-Methylpyrrolidon (NMP), Dimethylformamid (DMF), Dimethylacetamid (DMAc) bzw. Cyclohexanon lösen. Polyetherketone und Polyaryletherketone lassen sich beispielsweise in Diphenylsulfon bzw. in Sulfolan lösen. Polyamide lassen sich in einem alkoholischen Medium lösen, vorzugsweise einem Ethanol-Wasser-Gemisch lösen. Wie oben erläutert müssen ggf. auch Parameter wie z.B. Temperatur und Druck eingestellt werden, um ein gegebenes Polymer zu lösen.

Nach dem Lösen des betreffenden (ersten) Polymers wird dieses in Gegenwart der Kernpartikel, die ein zweites Polymer enthalten oder daraus bestehen, ausgefällt, um diese Kernpartikel mit dem betreffenden ausgefällten ersten Polymer ganz oder teilweise zu beschichten. Wie oben erwähnt, wird ein zweites Polymer als Kernpartikel ausgewählt, das sich unter den Bedingungen, unter denen sich das erste Polymer löst, nicht oder im wesentlichen nicht löst. Die Fällung des ersten Polymers kann durch Änderung des Druckes, Änderung der Temperatur, Änderung (Verringerung) der Konzentration des Lösungsmittels, und ggf. Zugabe eines Nichtlösers, anti-Lösungsmittels bzw. Fällungsmittels initiiert bzw. beschleunigt werden. Bei amorphen Polymeren, wie Polystyrol, Polysulfone, PMMI, PMMA, lonomer ist der Zusatz eines Nichtlösers zur Fällung des betreffenden Polymers erforderlich.

Das fällbare erste Polymer ist vorzugsweise ein Polyamid, welches pro Carbonamid-Gruppe zumindest 8 Kohlenstoffatome aufweist. Besonders bevorzugt ist das Polymer ein Polyamid, welches 10 oder mehr Kohlenstoffatome pro Carbonamid-Gruppe aufweist. Ganz besonders bevorzugt ist das Polymer ein Polyamid, ausgewählt aus Polyamid 612 (PA 612), Polyamid 11 (PA 11) und Polyamid 12 (PA 12). Der Prozess für die Herstellung für die in den erfindungsgemäßen Sinterpulver einsetzbaren Polyamiden ist allgemein bekannt und kann für die Herstellung von PA 12 z. B. den Schriften DE 29 06 647, DE 35 10 687, DE 35 10 691 und DE 44 21 454 entnommen werden. Das benötigte Polyamidgranulat kann von verschiedenen Herstellern bezogen werden, beispielsweise wird Polyamid 12 Granulat von der Evonik Industries AG unter dem Handelsnamen VESTAMID angeboten.

Besonders bevorzugt handelt es sich bei dem gefällten bzw. fällbaren Polymer um Polyamid 12.

Außerdem können die entsprechenden Copolyamide oder Mischungen aus Homo- und Copolyamiden eingesetzt werden, die mindestens 70 Gewichtsprozent der genannten Bausteine enthalten. Als Comonomere können sie demnach 0 bis 30 Gewichtsprozent eines oder mehrerer Comonomere, wie Caprolactam, Hexamethylendiamin, 2-Methyl-pentandiamin(1,5), Octamethylendiamin(1, 8), Dodecamethylendiamin, Isophorondiamin, Trimethylhexamethylendiamin, Adipinsäure, Korksäure, Azelainsäure, Sebacinsäure, Dodecandisäure, Aminoundecansäure, enthalten. Die im folgenden als Polyamide bezeichneten genannten Homo- und Copolyamide werden als Granulate oder Schrot eingesetzt, die ein relative Lösungsviskosität zwischen 1,5 und 2,0 (gemessen in 0,5%iger m-Kresollösung bei 25°C nach DIN 53 727), bevorzugt zwischen 1,70 und 1,95, besitzen. Sie können durch Polykondensation, hydrolytische oder acidolytische bzw. aktivierte anionische Polymerisation nach bekannten Verfahren hergestellt werden. Bevorzugt werden ungeregelte Polyamide mit Endgruppenverhältnissen NH₂/COOH = 40/60 bis 60/40 eingesetzt.. Es können jedoch zweckmäßig auch geregelte Polyamide eingesetzt werden und zwar bevorzugt solche, bei denen das Endgruppenverhältnis NH₂/COOH 90:10 und 80:20 bzw. 10:90 und 20:80 vorliegt.

Wie bereits oben erläutert, weisen die Kernpartikel einen mittleren Korndurchmesser d₅₀ von 1 µm oder größer auf.

In einer bevorzugten Ausführungsform weisen die Kernpartikel in allen drei Raumrichtungen eine Größe von 1 µm oder mehr auf.

In einer weiteren bevorzugten Ausführungsform weisen die Kernpartikel, die ein zweites Polymer enthalten oder daraus bestehen, einen mittleren Korndurchmesser d₅₀ von 1 bis 100 µm, bevorzugt von 10 bis 80 µm, vorzugsweise von 10 bis 70 µm, weiter bevorzugt von 10 bis 60 µm, weiterhin bevorzugt von 10 bis 50 µm, besonders bevorzugt von 10 bis 40 µm auf.
Geeignete Partikelgrößenverteilungen können durch bekannte Verfahren, z.B. Sieben, Sichten, gewährleistet werden.
Weiterhin ist bevorzugt, dass die Verbundpartikel einen mittleren Korndurchmesser d₅₀ von 20 bis 150 µm, vorzugsweise von 20 bis 120 µm, bevorzugt von 20 bis 100 µm, weiter bevorzugt von 25 bis 80 µm und besonders bevorzugt von 25 bis 70 µm aufweisen.
In einem bevorzugten Verfahren weist die Beschichtung aus dem gefällten Polymer eine Dicke von 1,5 µm oder mehr, bevorzugt 2, 3, 5, 10, 15, 20, 25, 30 µm oder mehr auf.
Das gewichtsbezogene Verhältnis des Polymers zu den Kernpartikeln bezogen auf die Gesamtheit der Verbundpartikel beträgt bevorzugt von 0,1 bis 30, vorzugsweise von 1,0 bis 20,0 und weiter bevorzugt von 1,3 bis 10,0.
Das Verhältnis des mittleren Korndurchmessers d₅₀ der Verbundpartikel zum mittleren Korndurchmesser d₅₀ der Kernpartikel beträgt von 1, 5 bis 30, vorzugsweise von 1,5 bis 25; weiter bevorzugt 1,5 bis 15, noch weiter bevorzugt 1,5 bis 12 und besonders bevorzugt 1,5 bis 10.
In einer weiteren bevorzugten Ausführungsform weist das erfindungsgemäße Pulver eine spezifische Oberfläche nach BET im Bereich von 2 - 30 m²/g, bevorzugt 2 - 15 m²/g; besonders bevorzugt von 3 - 12 m²/g und ganz besonders bevorzugt von 3 - 10 m²/g auf. Weiterhin weist das erfindungsgemäße Pulver eine Schüttdichte SD im Bereich von 200 bis 600 g/l, vorzugsweise von 200 bis 500 g/l auf.
In einer weiteren bevorzugten Ausführungsform ist die Dichte der Kernpartikel größer oder nicht mehr als 20%, vorzugsweise nicht mehr als 15%, weiter bevorzugt nicht mehr als 10% und besonders bevorzugt nicht mehr als 5% geringer als die Dichte des für die Fällung des ersten Polymers verwendeten Lösungsmittels.

Bei der Fällung des ersten Polymers in Anwesenheit der Kernpartikel wird besonders bevorzugt ein Alkanol (beispielsweise: Methanol, Ethanol, Propanol, Butanol), bevorzugt Ethanol als Lösungsmittel verwendet, wobei die Dichte der Kernpartikel größer ist oder nicht mehr als 20%, vorzugsweise nicht mehr als 15%, weiter bevorzugt nicht mehr als 10% und besonders bevorzugt nicht mehr als 5% geringer ist als die Dichte des Alkanols, bevorzugt von Ethanol.

Das Pulver kann die genannten Verbundpartikel alleine oder zusammen mit weiteren lose dazugemischten (Dry-Blend) Füllstoffen und/oder Hilfsstoffen enthalten. Der Anteil der Verbundpartikel im Pulver beträgt mindestens 50 Gew.-%, vorzugsweise mindestens 80 Gew.-%, bevorzugt mindestens 90 Gew.-%, besonders bevorzugt mindestens 95 Gew.-% und ganz besonders bevorzugt mindestens 99 Gew.-%.

Das erfindungsgemäße Pulver kann außerdem Hilfsstoffe und/oder weitere organische oder anorganische Pigmente aufweisen. Solche Hilfsstoffe können z. B. Rieselhilfsmittel, wie z. B. gefällte und/oder pyrogene Kieselsäuren, sein. Gefällte Kieselsäuren werden zum Beispiel unter dem Produktnamen AEROSIL®, mit unterschiedlichen Spezifikationen, durch die Evonik Industries AG angeboten. Vorzugsweise weist das erfindungsgemäße Pulver weniger als 3 Gew.-%, vorzugsweise von 0,001 bis 2 Gew.-% und ganz besonders bevorzugt von 0,025 bis 1 Gew.-% solcher Hilfsstoffe, bezogen auf die Summe der vorhandenen Polymere, auf. Die Pigmente können beispielsweise Titandioxidpartikel basierend auf Rutil (bevorzugt) oder Anatas sein oder Rußpartikel.

Zur Verbesserung der Verarbeitungsfähigkeit oder zur weiteren Modifikation des erfindungsgemäßen Pulvers können diesem anorganische Fremdpigmente, wie z.B. Übergangsmetalloxide, Stabilisatoren, wie z. B. Phenole, insbesondere sterisch gehinderte Phenole, Verlaufs- und Rieselhilfsmittel, wie z. B. pyrogene Kieselsäuren, zugegeben werden. Vorzugsweise wird, bezogen auf das Gesamtgewicht an Polymeren im Polymerpulver, so viel dieser Stoffe den Polymeren zugegeben, dass die für das erfindungsgemäße Pulver angegeben Konzentrationen für Hilfsstoffe eingehalten werden.

Optimale Eigenschaften bei der Weiterverarbeitung des Pulvers werden erreicht, wenn der Schmelzpunkt des ersten Polymers beim ersten Aufheizen größer ist als beim zweiten Aufheizen, gemessen durch Differentialscanningkalorimetrie (DSC); und wenn die Schmelzenthalpie des ersten Polymers beim ersten Aufheizen um mindestens 50% größer ist als beim zweiten Aufheizen, gemessen durch Differentialscanningkalorimetrie (DSC). Damit weist das Polymer der Hülle der Verbundpartikel (das erste Polymer) eine höhere Kristallinität auf, im Vergleich zu Pulvern, die durch andere Verfahren als Co-Fällung eines gelösten Polymers mit Partikeln hergestellt werden können. Für das Lasersintern ist insbesondere ein Polyamid 12 geeignet, welches eine Schmelztemperatur von 185 bis 189 °C, vorzugsweise von 186 bis 188 °C, eine Schmelzenthalpie von 112 +/- 17 kJ/mol, vorzugsweise von 100 bis 125 kJ/mol und eine Erstarrungstemperatur von 138 bis 143 °C, vorzugsweise von 140 bis 142 °C aufweist.

Die Erfindung stellt auch ein Verfahren bereit zur Herstellung der oben genannten erfindungsgemäßen Pulver, wobei ein Polymer unter Einwirkung von Druck und/oder Temperatur zur Erzeugung einer zumindest teilweisen Lösung mit einem Medium enthaltend Lösungsmittel, das das erste Polymer löst, in Gegenwart von Kernpartikeln in Berührung gebracht wird und anschließend das erste Polymer aus der zumindest teilweisen Lösung ausgefällt wird, und Erhalten von Verbundpartikeln, die durch ganz oder teilweise mit einem gefällten ersten Polymer beschichte Kernpartikel dargestellt werden, wobei die Kernpartikel ein zweites Polymer enthalten oder aus einem zweiten Polymer gefertigt sind, das verschieden ist vom gefällten ersten Polymer, und wobei das Verhältnis des mittleren Korndurchmessers d₅₀ der Verbundpartikel zum mittleren Korndurchmesser d₅₀ der Kernpartikel 1,5 oder größer beträgt.

Die Kernpartikel (Kern des Verbundpartikels) einen mittleren Korndurchmesser d₅₀ von 1 µm oder großer auf, bevorzugt 1 bis 100 µm, bevorzugt von 10 bis 80 µm, vorzugsweise von 10 bis 70 µm, bevorzugt von 10 bis 60 µm, weiter bevorzugt von 10 bis 50 µm, besonders bevorzugt von 10 bis 40 µm auf. Geeignete Partikelgrößenverteilungen können durch bekannte Verfahren, z.B. Sieben, Sichten, gewährleistet werden.

Dabei ist der Einsatz von polymeren Kernpartikeln, die in Suspension in dem Lösungsmittel für das fällbare erste Polymer vorliegen, von besonderer Bedeutung. In einer bevorzugten Verfahrensvariante ist das Verfahren der Erfindung dadurch ausgezeichnet, dass man eine Suspension aus im alkoholischen Medium suspendierten polymeren Kernpartikeln einsetzt, wobei die Kernpartikel die oben angegebene mittlere Teilchengröße (d₅₀) aufweisen.

Die durch das Herstellungsverfahren erzeugten Verbundpartikel weisen bevorzugt einen mittleren Korndurchmesser d₅₀ von 20 bis 150 µm, vorzugsweise von 20 bis 120 µm, bevorzugt von 20 bis 100 µm, weiter bevorzugt von 25 bis 80 µm und besonders bevorzugt von 25 bis 70 µm auf.

Ein Vorteil des erfindungsgemäßen Verfahrens ergibt sich daraus, dass ein Arbeitsschritt bei der Herstellung des Pulvers eingespart wird, weil die Mischung von Polymerpartikeln und Hilfs- bzw. Füllpartikeln im Dry Blend nicht mehr notwendig ist.

In einem bevorzugten Verfahren enthalten die Kernpartikel ein zweites Polymer oder sind daraus gefertigt. Diese Kernpartikel können je nach Beschaffenheit Vollkugeln, Hohlkugeln, poröse Kugeln darstellen. Die jeweiligen Kernpartikel können in folgenden Formen ausgebildet sein: kugelförmig, plättchenförmig oder länglich. Darüber hinaus können die jeweiligen Kernpartikel scharfkantig, abgerundet oder glatt sein. Die genannten Kernpartikel können vor Auftrag des gefällten ersten Polymers gegebenenfalls zusätzlich mit Schlichtemitteln beschichtet sein.

Das fällbare erste Polymer ist ausgewählt aus Polyolefine, Polyethylen, Polypropylen, Polyvinylchlorid, Polyacetal, Polystyrol, Polyimide, Polysulfone, Poly-(N-methylmethacrylimide) (PMMI), Polymethylmethacrylat (PMMA), Polyvinylidenflouride (PVDF), lonomer, Polyetherketone, Polyaryletherketone, Polyamid, Copolyamid oder Mischungen daraus, insbesondere Mischungen aus Homo- und Copolyamid.

In einer weiteren Ausführungsform wird das erste Polymer zur Beschichtung der Kernpartikel durch Fällung zumindest eines Polyamids des AABB-Types oder durch gemeinsame Fällung zumindest eines Polyamids des AB-Types und zumindest eines Polyamid des AABB-Types erhalten. Dabei sind cogefällte Polyamide bevorzugt, wobei zumindest Polyamid 11 oder Polyamid 12 und zumindest ein Polyamid auf der Basis von PA1010, PA1012, PA1212 oder PA1013 enthalten ist.

Die Art des Lösungsmittels und der Gehalt an Lösungsmittel, sowie die weiteren Parameter, um das entsprechende Polymer zu lösen und wieder zu fällen, hängen dabei vom Polymer ab, und sind bereits weiter oben erläutert worden.

Die folgenden Erläuterungen beziehen sich auf fällbare erste Polymere, die sich im alkoholischen Medium lösen lassen, insbesondere Polyamide. Für die Beschichtung von Kernpartikeln mit Polymeren, für die andere Lösungsmittel verwendet werden oder verwendet werden müssen, müssen die Parameter und Lösungsmittel entsprechend angepasst werden.

In bevorzugter Ausführungsform zeichnet sich das Verfahren der Erfindung dadurch aus, dass man eine Suspension einsetzt, erhältlich durch Suspendieren der Kernpartikel im Medium enthaltend das fällbare erste Polymer lösende Lösungsmittel, beispielsweise ein alkoholisches Medium, unter Einbringung eines Energieeintrages von größer als 1000 kJ/m³. Hierdurch entstehen im Allgemeinen schon sehr brauchbare Suspensionen der Kernpartikel in dem Medium. Der angesprochene Energieeintrag lässt sich durch bekannte Aggregate bewerkstelligen. Geeignete Aggregate können sein: Planetenkneter, RotorStator-Maschinen, Rührwerkkugelmühle, Walzenstuhl und dergleichen.

Die für die Erfindung nützlichen Suspensionen werden in einem Medium erzeugt, enthaltend Lösungsmittel die das fällbare erste Polymer lösen, beispielsweise einem alkoholischen Medium. Im Falle eines alkoholischen Mediums kann es sich hierbei um einen reinen Alkohol, eine Mischung von mehreren Alkoholen oder auch um Alkohole mit einem Gehalt an Wasser oder anderen die erwünschte Umfällung der Polyamide im Wesentlichen nicht nachteilig beeinflussende Substanzen handeln. Das alkoholische Medium der Suspensionen weist bevorzugt einen Gehalt von kleiner als 50 Gew.-% nicht alkoholischer Substanzen (vorzugsweise Wasser), besonders bevorzugt weniger als 30 Gew.-% und besonders zweckmäßig weniger als 10 Gew.-% fremder nicht alkoholischer Substanzen auf. Für die Erfindung in Frage kommen generell alle Arten von Alkoholen oder Gemische davon, die eine Umfällung von Polymeren, vorzugsweise Polyamiden, unter den erwünschten Bedingungen (Druck und Temperatur) zulassen. Im Einzelfall ist es für den Fachmann ohne größeren Aufwand möglich das System an spezielle Erfordernisse anzupassen. Bevorzugt werden für das Verfahren der Erfindung als alkoholisches Medium für die Umfällung des Polyamids und/oder die Suspension der Kernpartikel ein oder mehrere Alkohole verwendet, die ein Zahlenverhältnis von Sauerstoffatomen zu Kohlenstoffatomen im Bereich von 1:1 bis 1:5 aufweisen.

Typische Alkohole zur Herstellung der Suspension der Kernpartikel sind solche mit einem Verhältnis von Sauerstoff zu Kohlenstoff von 1:1, 1:2, 1:3 , 1:4 und 1:5, bevorzugt solche mit einem Sauerstoff zu Kohlenstoffverhältnis von 1:2 und 1:3, besonders bevorzugt mit einem Sauerstoff zu Kohlenstoff-Verhältnis von 1:2. Ganz besonders zweckmäßig kommt Ethanol zum Einsatz bei der Herstellung einer Suspension der Kernpartikel sowie bei der Umfällung des fällbaren Polymers, vorzugsweise der Polyamide.

Wie oben erläutert ist das fällbare erste Polymer ausgewählt aus Polyolefinen, Polyethylen, Polypropylen, Polyvinylchlorid, Polyacetal, Polystyrol, Polyimiden, Polysulfonen, Poly-(N-methylmethacrylimide) (PMMI), Polymethylmethacrylat (PMMA), Polyvinylidenflouriden (PVDF), lonomer, Polyetherketonen, Polyaryletherketonen, Polyamid, Copolyamid oder Mischungen daraus, insbesondere Mischungen aus Homo- und Copolyamid. Das fällbare Polyamid wird in einem entsprechenden Lösungsmittel gelöst, um es zur Beschichtung der Kernpartikel auf der Oberfläche derselben wieder auszufällen.

Bevorzugt werden als umfällbare Polymere Polyamide eingesetzt. Das fällbare Polymer ist vorzugsweise ein Polyamid, welches pro Carbonamid-Gruppe zumindest 8 Kohlenstoffatome aufweist. Besonders bevorzugt ist das Polymer ein Polyamid, welches 10 oder mehr Kohlenstoffatome pro Carbonamid-Gruppe aufweist. Bevorzugt als Ausgangsmaterial für das Verfahren der Erfindung einsetzbare Polyamide umfassen unter anderem Polyamid 11, Polyamid 12 und Polyamide mit mehr als 12 aliphatisch gebundenen Kohlenstoffatomen pro Carbonamidgruppe, vorzugsweise Polyamid 12. Außerdem können die entsprechenden Copolyamide oder Mischungen aus Homo- und Copolyamiden eingesetzt werden, die mindestens 70 Gewichtsprozent der genannten Bausteine enthalten. Als Comonomere können sie demnach 0 bis 30 Gewichtsprozent eines oder mehrerer Comonomere, wie Caprolactam, Hexamethylendiamin, 2-Methyl-pentandiamin(1,5), Octamethylendiamin(1,8), Dodecamethylendiamin, Isophorondiamin, Trimethylhexamethylendiamin, Adipinsäure, Korksäure, Azelainsäure, Sebacinsäure, Dodecandisäure, Aminoundecansäure, enthalten. Die im folgenden als Polyamide bezeichneten genannten Homo- und Copolyamide werden als Granulate oder Schrot eingesetzt, die ein relative Lösungsviskosität zwischen 1,5 und 2,0 (gemessen in 0,5%iger m-Kresollösung bei 25°C nach DIN 53 727), bevorzugt zwischen 1,70 und 1,95, besitzen. Sie können durch Polykondensation, hydrolytische oder acidolytische bzw. aktivierte anionische Polymerisation nach bekannten Verfahren hergestellt werden. Bevorzugt werden ungeregelte Polyamide mit Endgruppenverhältnissen NH₂/COOH = 40/60 bis 60/40 eingesetzt. Das Einsatzpolyamid kann maximal 0,2 Gewichtsprozent H₃PO₄ enthalten. Bevorzugt wird H₃PO₄-freies Polyamid eingesetzt. Es können jedoch zweckmäßig auch geregelte Polyamide eingesetzt werden und zwar bevorzugt solche, bei denen das Endgruppenverhältnis NH₂/COOH 90:10 und 80:20 bzw. 10:90 und 20:80 vorliegt.

Die Lösung der fällbaren ersten Polymere, vorzugsweise der Polyamide, zur Umfällung kann auf alle bekannten Weisen hergestellt werden. Von Vorteil ist eine möglichst vollständige Lösung der fällbaren Polymere, vorzugsweise des Polyamids, im entsprechenden Medium, vorzugsweise einem alkoholischen Medium, in Gegenwart der darin suspendierten Kernpartikel. Die Lösung kann durch Einsatz von Druck und/oder Temperatur gefördert werden. Zweckmäßig geht man so vor, dass man des fällbare Polymer, vorzugsweise das Polyamid, im alkoholischen Medium vorlegt und unter Einwirkung von erhöhter Temperatur über die notwendige Zeit auflöst. Die Suspension der Kernpartikel kann vor, während oder nach dem Auflösen des fällbaren Polymers, vorzugsweise des Polyamids, zugegeben werden. Zweckmäßig wird die Suspension der Kernpartikel zugleich mit dem fällbaren Polymer, vorzugsweise mit dem Polyamid, vorgelegt. Der Auflösevorgang wird günstiger Weise durch den Einsatz angepasster Rühraggregate unterstützt. Die Ausfällung des fällbaren Polymers, vorzugsweise des Polyamids, kann ebenfalls durch Anwendung von Druck und/oder Temperatur unterstützt werden. So führen vorzugsweise eine Absenkung der Temperatur und/oder Abdestillierung (vorzugsweise unter vermindertem Druck) des Lösungsmittels, d.h. des alkoholischen Mediums, zur Fällung des fällbaren Polymers, vorzugsweise des Polyamids. Es ist jedoch auch möglich, die Fällung durch Zugabe eines anti-Lösungsmittels (Fällungsmittels) zu unterstützen.

In einem weiteren bevorzugten Verfahren wird nach Bildung der Verbundpartikel eine Nachbehandlung in einem Mischer mit starker Scherung durchgeführt. Dabei liegt die Temperatur besonders bevorzugt oberhalb des Glaspunktes des jeweiligen Polymeren. Diese Maßnahme dient dazu, das Korn abzurunden und die Rieselfähigkeit zu verbessern.

Die oben genannten Parameter werden wie folgt bestimmt:
Die BET-Oberfläche wurde nach DIN ISO 9277: 2003-05 mit einem Gasadsorptionsgerät der Fa. Micromeritics zur Bestimmung der spezifischen Oberfläche nach dem BET-Verfahren ermittelt (Micromeritics TriStar 3000 V6.03: V6.03 bezieht sich auf die Softwareversion der Software Win3000). Die BET-Oberfläche wurde mittels Gasadsorption von Stickstoff nach dem diskontinuierlichen volumetrischen Verfahren (DIN ISO 9277:2003-05, Kap 6.3.1.) bestimmt. Hierzu wurden mehrere (sieben) Messpunkte bei Relativdrücken P/P0 zwischen 0,05 und 0,20 bestimmt. Die Kalibrierung des Totvolumens erfolgte mittels He (Reinheit mind. 4,6 [99,996 %] laut Arbeitsanweisung, bzw. mindestens 4,0 [99,99 %] laut Norm; dies gilt auch für N₂). Die Proben wurden jeweils 1 Stunde bei Raumtemperatur (21°C) und 16 Stunden bei 80°C unter Vakuum entgast. Die spezifische Oberfläche wurde auf die entgaste Probe bezogen. Die Auswertung erfolgte mittels Mehrpunktbestimmung (DIN ISO 9277:2003-05, Kap 7.2). Die Temperatur während der Messung betrug 77 K.

Die Partikelgröße (Feinheit d₅₀) wurde mittels Laserbeugung bestimmt. Die Messungen wurden mit einem Malvern Mastersizer 2000 durchgeführt. Es handelt sich dabei um eine Trockenmessung. Für die Messung wurden jeweils 20-40 g Pulver mit Hilfe des Scirocco Trockendispergiergeräts zudosiert. Die Rüttelrinne wurde mit einer Zuführrate von 70% betrieben. Der Dispergierluftdruck betrug 3 bar. Bei jeder Messung erfolgte eine Hintergrundmessung (10 Sekunden / 10000 Einzelmessungen). Die Messzeit der Probe war 5 Sekunden (5000 Einzelmessungen). Der Brechungsindex, sowie der Blaulichtwert wurden auf 1,52 festgelegt. Zur Auswertung wurde die Mie-Theorie herangezogen.

Die Schüttdichte ergibt sich gemäß DIN EN ISO 60.

Der Partikelgehalt wird durch eine Asche/Glührückstandbestimmung nach DIN EN ISO 3451 Teil 1 und Teil 4 bestimmt.

Eine Bestimmung der Lösungsviskosität erfolgte in 0,5 %-iger meta-Kresol Lösung nach ISO 307.

Gegenstand der vorliegenden Erfindung sind auch Verfahren zur Herstellung von Formkörpern durch ein schichtweise arbeitendes Verfahren, bei dem selektiv Bereiche der jeweiligen Pulverschicht durch den Eintrag elektromagnetischer Energie aufgeschmolzen werden, wobei die Selektivität durch die Auftragung von Suszeptoren, Inhibitoren, Absorbern oder durch Masken erzielt wird, wobei ein Pulver verwendet wird, das Verbundpartikel enthält, die durch ganz oder teilweise mit einem gefällten ersten Polymer beschichte Kernpartikel dargestellt werden, wobei die Kernpartikel ein zweites Polymer enthalten oder aus einem zweiten Polymer gefertigt sind, das verschieden ist vom gefällten ersten Polymer, und wobei das Verhältnis des mittleren Korndurchmessers d₅₀ der Verbundpartikel zum mittleren Korndurchmesser d₅₀ der Kernpartikel 1,5 oder größer beträgt.

Weiterhin werden Formkörper beschrieben, die aus dem erfindungsgemäßen Pulver durch das vorgenannte Verfahren erhalten worden sind. Der so hergestellte Formkörper enthält dabei bzw. ein Polymer bzw. Polymere, die vorzugsweise ausgewählt sind aus Polyolefinen, Polyethylen, Polypropylen, Polyvinylchlorid, Polyacetal, Polystyrol, Polyimiden, Polysulfonen, Poly-(N-methylmethacrylimide) (PMMI), Polymethylmethacrylat (PMMA), Polyvinylidenflouriden (PVDF), lonomer, Polyetherketonen, Polyaryletherketonen, Polyamid, Copolyamid oder Mischungen daraus, insbesondere Mischungen aus Homo- und Copolyamid. In einer weiteren Ausführungsform ist das Polymer zumindest ein Polyamid des AABB-Types oder eine Mischung zumindest eines Polyamids des AB-Types und zumindest eines Polyamids des AABB-Types. Dabei sind Mischungen von Polyamiden bevorzugt, wobei zumindest Polyamid 11 oder Polyamid 12 und zumindest ein Polyamid auf der Basis von PA1010, PA1012, PA1212 oder PA1013 enthalten ist.

Vorteile bei diesem Verfahren unter Verwendung des erfindungsgemäßen Pulvers ergeben sich daraus, dass sich das Pulver nicht mehr entmischt, weniger Lunker im Bauteil entstehen, sowie aus der besseren Recyclebarkeit, die Bauteile eine höhere Dichte und eine gleichmäßige Qualität aufweisen, sowie dass eine scharfe Trennung zwischen geschmolzenen und nicht aufgeschmolzenen Bereichen besteht, und dass der Verzug der Bauteile gering ist.

Die Energie wird durch elektromagnetische Strahlung eingebracht, und die Selektivität wird beispielsweise durch Masken, Auftragung von Inhibitoren, Absorbern, Suszeptoren oder aber durch eine Fokussierung der Strahlung, beispielsweise durch Laser, eingebracht. Die elektromagnetische Strahlung umfasst den Bereich von 100 nm bis 10 cm, bevorzugt zwischen 400 nm bis 10 600 nm oder zwischen 800 und 1 060 nm. Die Quelle der Strahlung kann beispielsweise ein Mikrowellengenerator, ein geeigneter Laser, ein Faserlaser, ein Heizstrahler oder eine Lampe sein, aber auch Kombinationen davon. Nach dem Abkühlen aller Schichten kann der Formkörper entnommen werden.

Die nachfolgenden Beispiele für solche Verfahren dienen der Erläuterung, ohne die Erfindung darauf beschränken zu wollen.

Die Lasersinterverfahren sind hinlänglich bekannt und beruhen auf dem selektiven Sintern von Polymerpartikeln, wobei Schichten von Polymerpartikeln kurz einem Laserlicht ausgesetzt werden und so die Polymerpartikel, die dem Laserlicht ausgesetzt waren, miteinander verbunden werden. Durch die aufeinanderfolgende Versinterung von Schichten von Polymerpartikeln werden dreidimensionale Objekte hergestellt. Einzelheiten zum Verfahren des selektiven Laser-Sinterns sind z. B. den Schriften US 6 136 948 und WO 96/06881 zu entnehmen.

Andere gut geeignete Verfahren sind das SIV-Verfahren, wie es in WO 01/38061 beschrieben wird, oder ein Verfahren wie in EP 1 015 214 beschrieben. Beide Verfahren arbeiten mit einer flächigen Infrarotheizung zum Aufschmelzen des Pulvers.

Die Selektivität des Aufschmelzens wird bei ersterem durch die Auftragung eines Inhibitors, beim zweiten Verfahren durch eine Maske erreicht. Ein weiteres Verfahren ist in DE 103 11 438 beschrieben. Bei diesem wird die zum Verschmelzen benötigte Energie durch einen Mikrowellengenerator eingebracht, und die Selektivität wird durch Auftragen eines Suszeptors erreicht.

Weitere geeignete Verfahren sind solche, die mit einem Absorber arbeiten, der entweder im Pulver enthalten ist, oder der per Inkjet-Verfahren aufgetragen wird wie in DE 10 2004 012 682.8, DE 10 2004 012 683.6 und DE 10 2004 020 452.7 beschrieben.

Die Formkörper, die durch ein schichtweise arbeitendes Verfahren, bei dem selektiv Bereiche aufgeschmolzen werden, hergestellt werden, zeichnen sich dadurch aus, dass sie zumindest ein Polymer sowie einen polymeren Verstärkungsstoff aufweisen, und dass dabei die Dichte des Komposit-Bauteiles gegenüber einem Bauteil hergestellt aus Komposit-Pulver nach dem Stand der Technik, abgesenkt wird. Weiterhin wird die Verzugsneigung reduziert und eine Verbesserung bei der Reproduzierbarkeit der mechanischen Eigenschaften im Formkörper erzielt.

Die Formkörper können außerdem Hilfsstoffe (hier gelten die Angaben wie für das Polymerpulver), wie z. B. thermische Stabilisatoren, wie z. B. sterisch gehinderte Phenolderivate, aufweisen. Vorzugsweise weisen die Formkörper weniger als 3 Gew.-%, besonders bevorzugt von 0,001 bis 2 Gew.-% und ganz besonders bevorzugt von 0,05 bis 1 Gew.-% solcher Hilfsstoffe, bezogen auf die Summe der vorhandenen Polymere, auf.

Anwendungsgebiete für diese Formkörper sind sowohl im Rapid Prototyping als auch im Rapid Manufacturing zu sehen. Mit letzterem sind durchaus Kleinserien gemeint, also die Herstellung von mehr als einem gleichen Teil, bei dem aber die Produktion mittels eines Spritzgießwerkzeugs nicht wirtschaftlich ist. Beispiele hierfür sind Teile für hochwertige PKW, die nur in kleinen Stückzahlen hergestellt werden, oder Ersatzteile für den Motorsport, bei denen neben den kleinen Stückzahlen auch der Zeitpunkt der Verfügbarkeit eine Rolle spielt. Branchen, in denen die Teile verwendet werden, können die Luft- und Raumfahrtindustrie sein, die Medizintechnik, der Maschinenbau, der Automobilbau, die Sportindustrie, die Haushaltswarenindustrie, Elektroindustrie und Lifestyle.

Die Erfindung betrifft auch die Verwendung des erfindungsgemäßen Pulvers in einem Verfahren zur Herstellung von Formkörpern durch ein schichtweise arbeitendes Verfahren, bei dem selektiv Bereiche der jeweiligen Pulverschicht durch den Eintrag elektromagnetischer Energie aufgeschmolzen werden, wobei die Selektivität durch die Auftragung von Suszeptoren, Inhibitoren, Absorbern oder durch Masken erzielt wird, wobei zumindest ein Pulver verwendet wird, das Verbundpartikel enthält, die ganz oder teilweise mit einem gefällten ersten Polymer beschichtet sind, wobei die Kernpartikel ein zweites Polymer enthalten oder aus einem zweiten Polymer gefertigt sind, das verschieden ist vom gefällten ersten Polymer, und wobei das Verhältnis des mittleren Korndurchmessers d₅₀ der Verbundpartikel zum mittleren Korndurchmesser d₅₀ der Kernpartikel 1,5 oder größer beträgt.

Die folgenden Beispiele sollen das erfindungsgemäße Pulver sowie dessen Verwendung beschreiben, ohne die Erfindung auf die Beispiele einzuschränken. Die Messwerte der Schüttdichte wurde mit einer Apparatur nach DIN EN ISO 60 ermittelt.

### Beispiele

### Beispiel 1: Umfällung von Polyamid 12 (PA 12) (nicht erfindungsgemäß)

400 kg ungeregeltes, durch hydrolytische Polymerisation hergestelltes PA 12 mit einer relativen Lösungsviskosität von 1.62 und einem Endgruppengehalt von 75 mmol/kg COOH bzw. 69 mmol/kg NH2 werden mit 2500 l Ethanol, vergällt mit 2-Butanon und 1 % Wassergehalt, innerhalb von 5 Stunden in einem 3 m³-Rührkessel (a = 160 cm) auf 145 °C gebracht und unter Rühren (Blattrührer, x = 80 cm, Drehzahl = 49 Upm) 1 Stunde bei dieser Temperatur belassen. Anschließend wurde die Manteltemperatur auf 124 °C reduziert und unter kontinuierlichem Abdestillieren des Ethanols mit einer Kühlrate von 25 K/h bei der derselben Rührerdrehzahl die Innentemperatur auf 125 °C gebracht. Von diesem Punkt an wurde bei gleicher Kühlrate die Manteltemperatur 2K - 3 K unter der Innentemperatur gehalten. Die Innentemperatur wurde mit eher Kühlrate auf 117 °C gebracht und dann 60 Minuten konstant gehalten. Danach wurde weiter bei einer Kühlrate von 40 K/h abdestilliert und so die Innentemperatur auf 111 °C gebracht wurde. Bei dieser Temperatur setzte die Fällung, erkennbar an der Wärmeentwicklung, ein. Die Destillationsgeschwindigkeit wurde soweit erhöht, dass die Innentemperatur nicht über 111.3 °C anstieg. Nach 25 Minuten fiel die Innentemperatur ab, was das Ende der Fällung anzeigte. Durch weiteres Abdestillieren und Kühlung über den Mantel wurde die Temperatur der Suspension auf 45 °C gebracht und die Suspension danach in einen Schaufeltrockner überführt. Das Ethanol wurde bei 70 °C/ 400 mbar abdestilliert und der Rückstand anschließend bei 20 mbar/86 °C für 3 Stunden nachgetrocknet.

Es wurde ein gefälltes PA 12 mit einem mittleren Korndurchmesser von 55 µm erhalten. Die Schüttdichte betrug 435g/l.

Analog dem in Beispiel 1 gezeigten Vorgehen oder nach DE 19708146 wurde ein Pulver mit Partikeln als Kern und einer Hülle aus PA12, PA 10.12, PA10.10, PA6.12, PA6.13, PA10.13, PA6.18, PA12.18 hergestellt.

### Beispiel 2: Einstufige Umfällung von PA12 mit Polymerpartikeln (erfindungsgemäß)

Es wurde entsprechend Beispiel 1 250 - 375 kg eines durch hydrolytische Polymerisation hergestelltes PA12 mit einer relativen Lösungsviskosität (ηᵣₑₗ) von 1,62 und einem Endgruppengehalt von 75 mmol/kg COOH bzw. 66 mmol/kg NH₂ in Anwesenheit von 17,5 - 258 kg Partikel mit den in Tabelle 1 dargestellten Kenndaten umgefällt. Die eingesetzten Partikel bestehen aus VESTAKEEP®-Pulver oder VESTAMID® HT+ und stellen den Kern des zu bildenden Verbundpartikels dar.

**Tabelle 1: Kenndaten der verschiedenen in Beispiel 2 verwendeten Kernpartikel:**

| **Partikel** | **d₅₀** |
|---|---|
| VESTAKEEP®-Pulver (Polyetheretherketon) | 21,9 µm |
| VESTAMID® HT+ (Polyphthalamid) | 60 µm |

In diesem Beispiel wurden die Fällbedingungen gegenüber Beispiel 1 folgendermaßen abgeändert:
Fälltemperatur: 108 °C
Fällungszeit: 150 min

Die Charakterisierung (Schüttdichte, Durchmesser und BET-Oberfläche) der gemäß Beispiel 2 hergestellten Pulver wird in Tabelle 2 zusammengefasst. Daneben gibt die Tabelle 2 auch die eingesetzten Mengen an Polyamid, Kernpartikel und Ethanol, sowie die bei dem Verfahren verwendete Rührerdrehzahl an.

**Tabelle 2: Charakterisierung der gemäß Beispiel 2 hergestellten Pulver**

| **RD** | **SD** | **d₅₀** | **BET** | **EtOH** | **PA** | **Partikel** |
|---|---|---|---|---|---|---|
| **Upm** | **g/L** | **µm** | **m²/g** | **L** | **kg** | **kg** |
| **VESTAKEEP®-Pulver** | | | | | | |
| 39 | 352 | 79 | 4,8 | 2500 | 348 | 17,5 |
| 39 | 300 | 70 | 5,7 | 2500 | 348 | 35 |
| 39 | 286 | 59 | 6,6 | 2500 | 348 | 52,5 |
| 39 | 276 | 52 | 7,3 | 2500 | 348 | 70 |
| 39 | 290 | 61 | 6,1 | 2500 | 348 | 87 |
| 39 | 279 | 57 | 6,6 | 2500 | 348 | 116 |
| 39 | 275 | 50 | 6,7 | 2500 | 348 | 150 |
| 39 | 268 | 40 | 7,2 | 2500 | 348 | 187,5 |
| 39 | 271 | 36 | 7,7 | 2500 | 348 | 232 |
| 39 | 274 | 31 | 7,6 | 2500 | 315 | 258 |
| 39 | 292 | 53 | 5,6 | 2500 | 348 | 116 |
| 39 | 270 | 35 | 6,7 | 2500 | 348 | 187 |
| 39 | 274 | 29 | 6,9 | 2500 | 315 | 258 |
| 39 | 287 | 56 | 6,5 | 2500 | 348 | 116 |
| 39 | 276 | 41 | 7,9 | 2500 | 348 | 187 |
| 39 | 282 | 31 | 9 | 2500 | 315 | 258 |
| 39 | 272 | 95 | 8,7 | 2500 | 348 | 116 |
| 39 | 258 | 57 | 8,4 | 2500 | 315 | 170 |
| 39 | 239 | 44 | 8,7 | 2500 | 272 | 223 |
| | | | | | | |

| **VESTAMID® HT+ (10.6-10T)** | | | | | | |
|---|---|---|---|---|---|---|
| 39 | 380 | 99 | 3,5 | 2500 | 348 | 18 |
| 39 | 341 | 83 | 4,4 | 2500 | 348 | 62 |
| 39 | 332 | 78 | 5 | 2500 | 348 | 117 |
| 39 | 321 | 78 | 5,7 | 2500 | 348 | 189 |
| 39 | 320 | 78 | 6,7 | 2500 | 348 | 233 |
| 39 | 410 | 132 | 3,3 | 2500 | 348 | 117 |

| | | | | | | |
|---|---|---|---|---|---|---|
| RD= Rührerdrehzahl; SD=Schüttdichte | | | | | | |

## Patentansprüche

1. Pulver zur Verwendung in einem schichtweise arbeitenden Verfahren zur Herstellung von Formkörpern, bei dem selektiv Bereiche der jeweiligen Pulverschicht durch den Eintrag elektromagnetischer Energie aufgeschmolzen werden, enthaltend Verbundpartikel, die von ganz oder teilweise mit einem gefällten ersten Polymer beschichten Kernpartikeln dargestellt werden, wobei die Kernpartikel ein zweites Polymer enthalten oder aus einem zweiten Polymer gefertigt sind, das verschieden ist vom gefällten ersten Polymer, und wobei das Verhältnis des mittleren Korndurchmessers d₅₀ der Verbundpartikel zum mittleren Korndurchmesser d₅₀ der Kernpartikel, jeweils mittels Laserbeugung wie in der Beschreibung offenbart bestimmt, 1,5 oder größer beträgt, **dadurch gekennzeichnet, dass** das gefällte erste Polymer ausgewählt ist aus Polyolefine, Polyethylen, Polypropylen, Polyvinylchlorid, Polyacetal, Polystyrol, Polyimide, Polysulfone, Poly-(N-methylmethacrylimide) (PMMI), Polymethylmethacrylat (PMMA), Polyvinylidenflouride (PVDF), lonomer, Polyetherketone, Polyaryletherketone, Polyamid, Copolyamid oder Mischungen daraus und dass die Kernpartikel, die ein zweites Polymer enthalten oder daraus bestehen, einen mittleren Korndurchmesser d₅₀ von 1 µm oder größer aufweisen und das zweite Polymer ausgewählt ist aus Polycarbonat, Polymethylmethacrylat, Polypropylen, Polybutylenterephthalat, Polyetylenterephthalat, Polyetheretherketon, Polyphthalamid.

2. Das Pulver nach Anspruch 1, **dadurch gekennzeichnet, dass** die Kernpartikel aus einem zweiten Polymer gefertigt sind.

3. Das Pulver nach irgend einem der Ansprüche 1 oder 2, **dadurch gekennzeichnet, dass** die Verbundpartikel einen mittleren Korndurchmesser d₅₀ von 20 bis 150 µm, vorzugsweise von 20 bis 120 µm, bevorzugt von 20 bis 100 µm, weiter bevorzugt von 25 bis 80 µm und besonders bevorzugt von 25 bis 70 µm aufweisen.

4. Das Pulver nach irgend einem der Ansprüche 1 bis 3, **dadurch gekennzeichnet, dass** das gewichtsbezogene Verhältnis des ersten Polymers zu den Kernpartikeln bezogen auf die Gesamtheit der Verbundpartikel von 0,1 bis 30, vorzugsweise von 1,0 bis 20,0 und weiter bevorzugt von 1,2 bis 10,0 beträgt.

5. Das Pulver nach irgend einem der Ansprüche 1 bis 4, **dadurch gekennzeichnet, dass** das Verhältnis des mittleren Korndurchmessers d₅₀ der Verbundpartikel zum mittleren Korndurchmesser d₅₀ der Kernpartikel von 1,5 bis 30, bevorzugt 1,5 bis 25; noch weiter bevorzugt 1,5 bis 15, besonders bevorzugt 1,5 bis 12 und ganz besonders bevorzugt 1,5 bis 10 beträgt.

6. Das Pulver nach irgend einem der Ansprüche 1 bis 5, **dadurch gekennzeichnet, dass** der Anteil der Verbundpartikel im Pulver mindestens 50 Gew.-%, vorzugsweise mindestens 80 Gew.-%, bevorzugt mindestens 90 Gew.-%, besonders bevorzugt mindestens 95 Gew.-% und ganz besonders bevorzugt mindestens 99 Gew.-% beträgt.

7. Das Pulver nach irgend einem der Ansprüche 1 bis 6, **dadurch gekennzeichnet, dass** der Schmelzpunkt des ersten Polymers beim ersten Aufheizen größer ist als beim zweiten Aufheizen, gemessen durch Differentialscanningkalorimetrie (DSC).

8. Das Pulver nach irgend einem der Ansprüche 1 bis 6, **dadurch gekennzeichnet, dass** die Schmelzenthalpie des ersten Polymers beim ersten Aufheizen um mindestens 50% größer ist als beim zweiten Aufheizen, gemessen durch Differentialscanningkalorimetrie (DSC).

9. Verfahren zur Herstellung von Pulvern, wie in irgend einem der Ansprüche 1 bis 8 definiert, wobei ein Polymer unter Einwirkung von Druck und/oder Temperatur zur Erzeugung einer zumindest teilweisen Lösung mit einem Medium enthaltend Lösungsmittel, das das erste Polymer löst, in Gegenwart von Kernpartikeln in Berührung gebracht wird und anschließend das erste Polymer aus der zumindest teilweisen Lösung ausgefällt wird, und Erhalten von Verbundpartikeln, die durch ganz oder teilweise mit einem gefällten ersten Polymer beschichte Kernpartikel dargestellt werden, wobei die Kernpartikel ein zweites Polymer enthalten oder aus einem zweiten Polymer gefertigt sind, das verschieden ist vom gefällten ersten Polymer, und wobei das Verhältnis des mittleren Korndurchmessers d₅₀ der Verbundpartikel zum mittleren Korndurchmesser d₅₀ der Kernpartikel 1,5 oder größer beträgt.

10. Verfahren zur Herstellung von Formkörpern durch ein schichtweise arbeitendes Verfahren, bei dem selektiv Bereiche der jeweiligen Pulverschicht durch den Eintrag elektromagnetischer Energie aufgeschmolzen werden, wobei die Selektivität durch die Auftragung von Suszeptoren, Inhibitoren, Absorbern oder durch Masken erzielt wird, wobei ein Pulver nach mindestens einem der Ansprüche 1 bis 8 verwendet wird, insbesondere ein Pulver, das Verbundpartikel enthält, die durch ganz oder teilweise mit einem gefällten ersten Polymer beschichte Kernpartikel dargestellt werden, wobei die Kernpartikel ein zweites Polymer enthalten oder aus einem zweiten Polymer gefertigt sind, das verschieden ist vom gefällten ersten Polymer, und wobei das Verhältnis des mittleren Korndurchmessers d₅₀ der Verbundpartikel zum mittleren Korndurchmesser d₅₀ der Kernpartikel 1,5 oder größer beträgt.

11. Verwendung des Pulvers gemäß irgendeinem der Ansprüche 1 bis 8 in einem Verfahren gemäß Anspruch 10.

12. Pulver erhältlich nach einem Verfahren gemäß Anspruch 9.

## Claims

1. Powder for use in a layer-by-layer process for producing mouldings by selectively melting regions of the respective powder layer through introduction of electromagnetic energy, comprising composite particles which are produced from core particles completely or partially coated with a precipitated first polymer, where the core particles comprise a second polymer or have been manufactured from a second polymer which differs from the precipitated first polymer and where the ratio of the dso median diameter of the composite particles to the d₅₀ median diameter of the core particles, determined in each case by means of laser scattering as disclosed in the description, is 1.5 or greater, **characterized in that** the precipitated first polymer has been selected from polyolefins, polyethylene, polypropylene, polyvinyl chloride, polyacetal, polystyrene, polyimides, polysulphones, poly(N-methylmethacrylimides) (PMMI), polymethyl methacrylate (PMMA), polyvinylidene fluorides (PVDF), ionomer, polyether ketones, polyaryl ether ketones, polyamide, copolyamide or a mixture thereof, **in that** the core particles, which comprise a second polymer or are composed thereof, have a d₅₀ median diameter of 1 µm or greater, and the second polymer has been selected from polycarbonate, polymethyl methacrylate, polypropylene, polybutylene terephthalate, polyethylene terephthalate, polyether ether ketone and polyphthalamide.

2. Powder according to Claim 1, **characterized in that** the core particles have been manufactured from a second polymer.

3. Powder according to any one of Claims 1 or 2, **characterized in that** the d₅₀ median diameter of the composite particles is from 20 to 150 µm, with preference from 20 to 120 µm, preferably from 20 to 100 µm, more preferably from 25 to 80 µm and particularly preferably from 25 to 70 µm.

4. Powder according to any one of Claims 1 to 3, **characterized in that** the ratio, based on weight, of the first polymer to the core particles, based on the entirety of the composite particles, is from 0.1 to 30, with preference from 1.0 to 20.0 and more preferably from 1.2 to 10.0.

5. Powder according to any one of Claims 1 to 4, **characterized in that** the ratio of the d₅₀ median diameter of the composite particles to the d₅₀ median diameter of the core particles is from 1. 5 to 30, preferably from 1.5 to 25; even more preferably from 1.5 to 15, particularly preferably from 1.5 to 12 and very particularly preferably from 1.5 to 10.

6. Powder according to any one of Claims 1 to 5, **characterized in that** the proportion of the composite particles in the powder is at least 50% by weight, with preference at least 80% by weight, preferably at least 90% by weight, particularly preferably at least 95% by weight and very particularly preferably at least 99% by weight.

7. Powder according to any one of Claims 1 to 6, **characterized in that** the melting point of the first polymer in the first heating procedure is greater than in the second heating procedure, measured by differential scanning calorimetry (DSC).

8. Powder according to any one of Claims 1 to 6, **characterized in that** the enthalpy of fusion of the first polymer in the first heating procedure is at least 50% greater than in the second heating procedure, measured by differential scanning calorimetry (DSC).

9. Process for producing powders, as defined in any one of Claims 1 to 8, where, in order to produce an at least partial solution, a polymer is brought into contact, in the presence of core particles, with exposure to pressure and/or heat, with a medium comprising solvent which dissolves the first polymer, and then the first polymer is precipitated from the at least partial solution, and composite particles are obtained which are produced by core particles coated entirely or partially with a precipitated first polymer, where the core particles comprise a second polymer or have been manufactured from a second polymer which differs from the precipitated first polymer, and where the ratio of the d₅₀ median diameter of the composite particles to the d₅₀ median diameter of the core particles is 1.5 or greater.

10. Process for producing mouldings by a layer-by-layer process in which regions of the respective powder layer are selectively melted through introduction of electromagnetic energy, where the selectivity is achieved by applying susceptors, inhibitors, or absorbers or by masks, where a powder according to at least one of Claims 1 to 8 is used, in particular a powder which comprises composite particles which are produced by core particles coated entirely or partially with a precipitated first polymer, where the core particles comprise a second polymer or have been manufactured from a second polymer which differs from the precipitated first polymer, and where the ratio of the d₅₀ median diameter of the composite particles to the d₅₀ median diameter of the core particles is 1.5 or greater.

11. Use of the powder according to any one of Claims 1 to 8 in a process according to Claim 10.

12. Powder obtainable according to a process according to Claim 9.

## Revendications

1. Poudre destinée à une utilisation dans un procédé fonctionnant en couches pour la fabrication de corps moulés, selon lequel des zones de la couche de poudre en question sont fondues sélectivement par l'apport d'énergie électromagnétique, contenant des particules composites, qui sont constituées par des particules noyaux revêtues en totalité ou en partie avec un premier polymère précipité, les particules noyaux contenant un deuxième polymère ou étant fabriquées en un deuxième polymère qui est différent du premier polymère précipité, et le rapport entre le diamètre de particule moyen d₅₀ des particules composites et le diamètre de particule moyen d₅₀ des particules noyaux, chacun déterminés par diffraction laser tel que décrit dans la description, étant de 1,5 ou plus, **caractérisée en ce que** le premier polymère précipité est choisi parmi les polyoléfines, le polyéthylène, le polypropylène, le polychlorure de vinyle, le polyacétal, le polystyrène, les polyimides, les polysulfones, les poly-(N-méthylméthacrylimides) (PMMI), le polyméthacrylate de méthyle (PMMA), le polyfluorure de vinylidène (PVDF), les ionomères, les polyéther-cétones, les polyaryléther-cétones, le polyamide, le copolyamide ou leurs mélanges, et **en ce que** les particules noyaux, qui contiennent un deuxième polymère ou en sont constituées, présentent un diamètre de particule moyen d₅₀ de 1 µm ou plus, et le deuxième polymère est choisi parmi le polycarbonate, le polyméthacrylate de méthyle, le polypropylène, le polybutylène téréphtalate, le polyéthylène téréphtalate, la polyéther-éther-cétone, le polyphtalamide.

2. Poudre selon la revendication 1, **caractérisée en ce que** les particules noyaux sont fabriquées en un deuxième polymère.

3. Poudre selon l'une quelconque des revendications 1 ou 2, **caractérisée en ce que** les particules composites présentent un diamètre de particule moyen d₅₀ de 20 à 150 µm, de préférence de 20 à 120 µm, avantageusement de 20 à 100 µm, de manière davantage préférée de 25 à 80 µm et de manière particulièrement préférée de 25 à 70 µm.

4. Poudre selon l'une quelconque des revendications 1 à 3, **caractérisée en ce que** le rapport en poids entre le premier polymère et les particules noyaux, par rapport à la totalité des particules composites, est de 0,1 à 30, de préférence de 1,0 à 20,0 et de manière davantage préférée de 1,2 à 10,0.

5. Poudre selon l'une quelconque des revendications 1 à 4, **caractérisée en ce que** le rapport entre le diamètre de particule moyen d₅₀ des particules composites et le diamètre de particule moyen d₅₀ des particules noyaux est de 1,5 à 30, de préférence de 1,5 à 25, de manière encore davantage préférée de 1,5 à 15, de manière particulièrement préférée de 1,5 à 12 et de manière tout particulièrement préférée de 1,5 à 10.

6. Poudre selon l'une quelconque des revendications 1 à 5, **caractérisée en ce que** la proportion de particules composites dans la poudre est d'au moins 50 % en poids, de préférence d'au moins 80 % en poids, avantageusement d'au moins 90 % en poids, de manière particulièrement préférée d'au moins 95 % en poids et de manière tout particulièrement préférée d'au moins 99 % en poids.

7. Poudre selon l'une quelconque des revendications 1 à 6, **caractérisée en ce que** le point de fusion du premier polymère lors du premier chauffage est supérieur à celui lors du deuxième chauffage, mesuré par calorimétrie différentielle à balayage (DSC).

8. Poudre selon l'une quelconque des revendications 1 à 6, **caractérisée en ce que** l'enthalpie de fusion du premier polymère lors du premier chauffage est au moins 50 % supérieure à celle lors du deuxième chauffage, mesurée par calorimétrie différentielle à balayage (DSC).

9. Procédé de fabrication de poudres, telles que définies dans l'une quelconque des revendications 1 à 8, dans lequel un polymère est mis en contact sous l'effet de la pression et/ou de la température pour former une solution au moins partielle avec un milieu contenant un solvant qui dissout le premier polymère, en présence de particules noyaux, puis le premier polymère est précipité à partir de la solution au moins partielle, et des particules composites sont obtenues, qui sont constituées par des particules noyaux revêtues en totalité ou en partie avec un premier polymère précipité, les particules noyaux contenant un deuxième polymère ou étant fabriquées en un deuxième polymère qui est différent du premier polymère précipité, et le rapport entre le diamètre de particule moyen d₅₀ des particules composites et le diamètre de particule moyen d₅₀ des particules noyaux étant de 1,5 ou plus.

10. Procédé de fabrication de corps moulés par un procédé fonctionnant en couches selon lequel des zones de la couche de poudre en question sont fondues sélectivement par l'apport d'énergie électromagnétique, la sélectivité étant obtenue par l'application de suscepteurs, d'inhibiteurs, d'absorbeurs ou par masquage, une poudre selon au moins l'une quelconque des revendications 1 à 8 étant utilisée, notamment une poudre qui contient des particules composites qui sont constituées par des particules noyaux revêtues en totalité ou en partie avec un premier polymère précipité, les particules noyaux contenant un deuxième polymère ou étant fabriquées en un deuxième polymère qui est différent du premier polymère précipité, et le rapport entre le diamètre de particule moyen d₅₀ des particules composites et le diamètre de particule moyen d₅₀ des particules noyaux étant de 1,5 ou plus.

11. Utilisation de la poudre selon l'une quelconque des revendications 1 à 8 dans un procédé selon la revendication 10.

12. Poudre pouvant être obtenue par un procédé selon la revendication 9.
